# EUROPEAN PATENT SPECIFICATION

(11) **EP 2 385 261 B1**
(45) Date of publication and mention of the grant of the patent: **03.07.2013**
(21) Application number: 11159637.5
(22) Date of filing: 24.03.2011
(51) Int. Cl.: F16B 25/10

(54) **Self-tapping screw**
Selbstschneidende Schraube
Vis autotaraudeuse

(30) Priority: 06.05.2010 TW 099208361
(43) Date of publication of application: 09.11.2011
(73) Proprietor: Chang, Chia-Ming, Kaohsiung (TW)
(72) Inventor: Cheng, Shih-Chuan, Kaohsiung (TW); Chang, Chia-Ming, Kaohsiung (TW)
(74) Representative: Gervasi, Gemma

(56) References cited:
- EP-A1- 0 997 651
- US-A- 1 288 893
- US-A- 3 789 725

## Description

### 1. Field of the Invention

The present invention relates to a self-tapping screw, and more particularly to a self-tapping screw having enhanced drilling, tapping and chip-evacuating capabilities.

### 2. Description of the Related Art

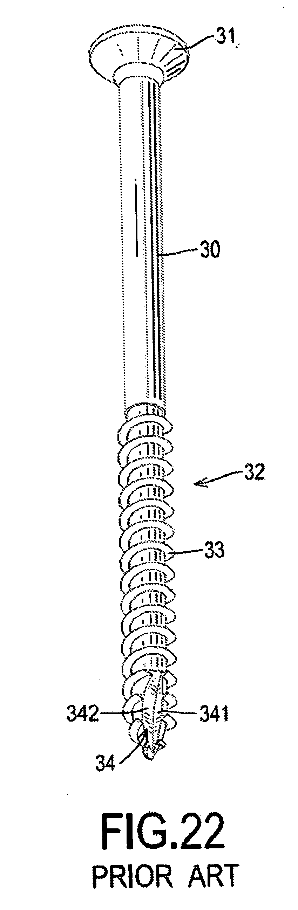

With reference to Fig. 22, a conventional self-tapping screw has a shank 30, a head 31 and an acting portion 32. The shank 30 has a top end and a bottom end. The head 31 having a larger diameter is formed on the top end of the shank 30. The acting portion 32 is formed on the bottom end of the shank 30 having a threaded portion 33 helically formed around the bottom end. The acting portion 32 has a V-shaped slot 34 formed in the acting portion 32 and axially extending a predetermined length from a tip of the acting portion 32, and having a cutting surface 341 and an arced surface 342. The cutting surface 341 axially extends from the tip of the acting portion 32 to contain a center axis of the self-tapping screw. The arced surface 342 is connected with the cutting surface 341 at a common edge of the arced surface 342 and the cutting surface 341 to form a V-shaped section. When the self-tapping screw is drilled into a work piece, the tip of the acting portion 32 abuts against the work piece, and a tool, such as an electrical tool, is connected to the head 31 and rotates the self-tapping screw so that the self-tapping screw can be drilled and screwed into the work piece. The tip of the driving portion 32 and the cutting surface 341 of the V-shaped slot 34 can drill a hole into the work piece. The portions of the cutting surface adjoining the edges of the thread can cut a thread into an inner wall of the drilled hole so that the self-tapping screw can be screwed into the drilled hole of the work piece.

Despite the drilling, tapping and fastening functions, the drilling performance of the conventional self-tapping screw is not sufficient because that the V-shaped slot 34 is axially cut into the shank 30 and is adjacent to the center axis of the self-tapping screw and has a relatively small cutting surface 341.

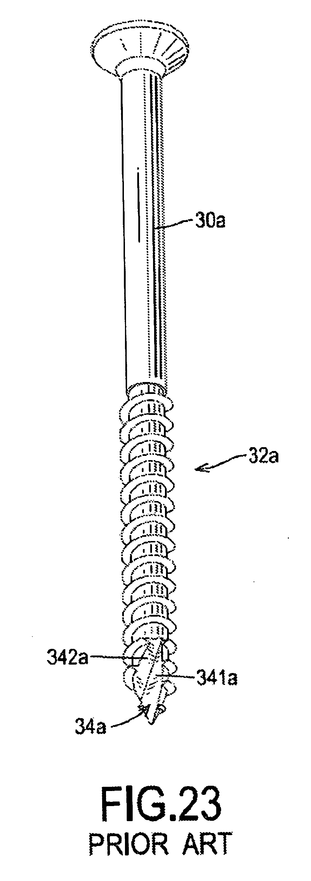

With reference to Fig. 23, another conventional self-tapping screw is similar to the aforementioned one except that the arced surface 342a axially and upwardly extends from a position at approximately two thread ridges apart from the tip of the acting portion 32a.

Such design increases the area of the cutting surface 341 a and deepens the V-shaped slot 34a. However, the acting portion 32a adjoining the tip portion is thinner and thus weaker in strength and prone to fracture. Hence, the conventional self-tapping screw is only applicable to soft work pieces. Additionally, due to the deeper V-shaped slot 34a and longer time in machining the cutting surface 341a, the cutting portions of the cutting surface 341 a adjoining the thread ridges and located between the thread ridges easily incur burrs. The rough burrs between the thread ridges are uneasy to be removed, thereby affecting the quality of the conventional self-tapping screw.

Disclosed in EP 0 997 651 A1 titled "Screw", another conventional self-tapping screw, according to the preamble of claim 1, has a head (1) and a shank (2) with a helical thread (3). The shank (2) has two or more lengthwise grooves (5, 6) overlapping completely or partially or not overlapping at all, when view projectively from the horizontal surface or from the vertical surface of the center line or axis of the screw.

An objective of the present invention is to provide a self-tapping screw having enhanced drilling, tapping and chip-evacuating capabilities.

To achieve the foregoing objective, the self-tapping screw as claimed in claim 1 has a shank, a head and an acting portion.

The shank has a center axis, a periphery, a top and a lower portion.

The head is formed on the top of the shank. The acting portion is formed in the lower portion of the shank, and has a periphery, a tip portion, a threaded portion, a tapered cone, a cutting slot and a first evacuation slot. The threaded portion has a thread helically formed around the periphery of the acting portion. The tapered cone is formed on the tip portion of the acting portion and has a tip. The acting portion further has a cutting slot formed in the acting portion, obliquely extends from the tapered cone in a direction toward the head, and has a chip evacuation surface and an arced cutting surface. The chip evacuation surface is tilted relative to the center axis of the shank. The arced cutting surface is connected with the chip evacuation surface at a common edge of the arced cutting surface and the chip evacuation surface to form a V-shaped section, upwardly extends from the tip of the tapered cone, and has a blade portion formed by a portion of the arced cutting surface intersecting with the periphery of the shank and the threaded portion. The first evacuation slot is formed in the acting portion, is tilted relative to the center axis of the shank, upwardly extends toward the head and has a first surface and a second surface. The first surface is tilted relative to the center axis of the shank and is parallel to the chip evacuation surface of the adjacent cutting slot. The second surface is connected with the first surface at a common edge of the first surface and the second surface. The second surface and the arced cutting surface are arcuately formed in the acting portion with respect to a common line.

Preferably, the acting portion further has a first evacuation slot obliquely formed in the acting portion, upwardly extending toward the head and has a first surface and a second surface. The first surface is tilted relative to the center axis of the shank and is parallel to the chip evacuation surface of the adjacent cutting slot. The second surface is connected with the first surface at a common edge of the first surface and the second surface and is oppositely deflected relative to the arced cutting surface of the cutting slot.

The arced cutting surface of the cutting slot obliquely formed in the acting portion of the shank provides a larger cutting surface, thereby enhancing the drilling and tapping capability of the self-tapping screw. Additionally, the first evacuation slot formed in the acting portion and being parallel to the cutting slot further enhances the drilling and tapping capability besides facilitating the evacuation of chips generated in drilling and tapping.

Other objectives, advantages and novel features of the invention will become more apparent from the following detailed description when taken in conjunction with the accompanying drawings.

### IN THE DRAWINGS

Fig. 1 is a perspective view of a first embodiment of a self-tapping screw not according to the present invention;
Fig. 2 is a first enlarged side view of the self-tapping screw in Fig. 1;
Fig. 3 is a second enlarged side view of the self-tapping screw in Fig. 1;
Fig. 4 is a side view of a second embodiment of a self-tapping screw not according to the present invention;
Fig. 5 is a side view of a third embodiment of a self-tapping screw not according to the present invention;
Fig. 6 is an operational side view in partial section of the self-tapping screw in Fig. 1;
Fig. 7 is a perspective view of a first embodiment of a self-tapping screw in accordance with the present invention;
Fig. 8 is an enlarged side view of the self-tapping screw in Fig. 7;
Fig. 9 is an operational enlarged side view in partial section of the self-tapping screw in Fig. 7.
Fig. 10 is a perspective view of a second embodiment of a self-tapping screw in accordance with the present invention;
Fig. 11 is an enlarged side view of the self-tapping screw in Fig. 10;
Fig. 12 is a side view of a third embodiment of a self-tapping screw in accordance with the present invention;
Fig. 13 is a side view of a fourth embodiment of a self-tapping screw in accordance with the present invention;
Fig. 14 is another side view of the self-tapping screw in Fig. 13;
Fig. 15 is an enlarged bottom view of the self-tapping screw in Fig. 12;
Fig. 16 is a side view of an fifth embodiment of a self-tapping screw in accordance with the present invention;
Fig. 17 is an enlarged side view of the self-tapping screw in Fig. 16;
Fig. 18 is a side view of a sixth embodiment of a self-tapping screw in accordance with the present invention;
Fig. 19 is an enlarged side view of the self-tapping screw in Fig. 18;
Fig. 20 is a side view of a seventh embodiment of a self-tapping screw in accordance with the present invention;
Fig. 21 is an enlarged side view of the self-tapping screw in Fig. 20;
Fig. 22 is a perspective view of a conventional self-tapping screw; and
Fig. 23 is a perspective view of another conventional self-tapping screw.

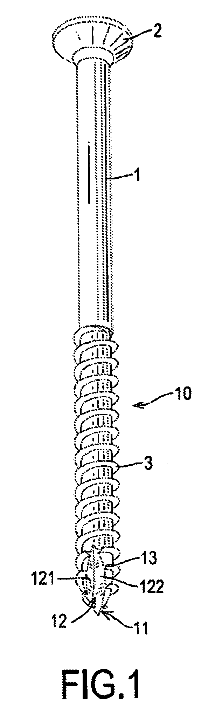

With reference to Figs. 1 to 3, a first embodiment of a self-tapping screw not according to the present invention has a shank 1, a head 2 and an acting portion 10.

The shank 1 has a center axis 4. The head 2 having a larger diameter is formed on a top of the shank 1 for an electric tool to connect with the head 2 and rotate the self-tapping screw. The acting portion 10 is formed in a lower portion of the shank 1 and has a threaded portion 3, a tapered cone 11 and a cutting slot 12. The threaded portion 3 has a thread helically formed around a periphery of the acting portion 10. The tapered cone 11 is formed on a tip portion of the acting portion 10. The cutting slot 12 is formed in the acting portion 10, is tilted relative to the center axis 4 of the shank 1, extends from the tapered cone 11 in a direction toward the head 2, and has a chip evacuation surface 121, a arced cutting surface 122 and a blade portion 13. The chip evacuation surface 121 upwardly extends from a position above a tip of the tapered cone 11 and is tilted relative to the center axis 4 of the shank 1. The arced cutting surface 122 is connected with the chip evacuation surface 121 at a common edge thereof of the arced cutting surface 122 and the chip evacuation surface 121 to form a V-shaped section and upwardly extends from the tip of the tapered cone 11. The blade portion 13 is formed at a position where the arced cutting surface 122 intersects with a periphery of the shank 1 and the threaded portion 3.

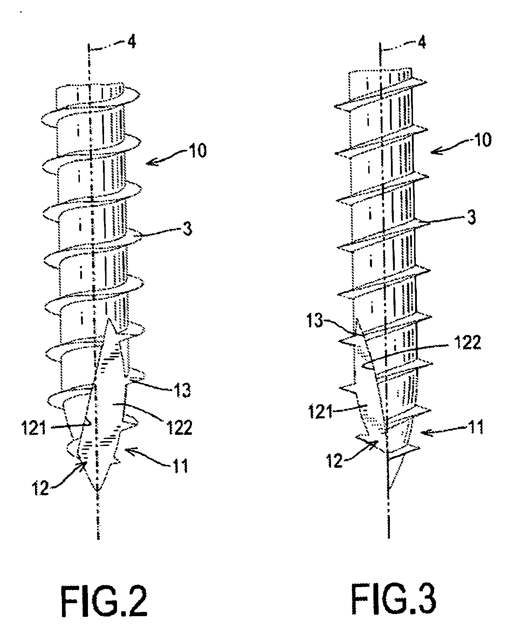

With reference to Fig. 3, the arced cutting surface 122 of the cutting slot 12 is incised into the acting portion 10 along a downward and rightward curve on the periphery of the acting portion 10 so that a bottom end of the arced cutting surface 122 approaches the center axis 4. With reference to Fig. 2, the chip evacuation surface 121 of the cutting slot 12 is incised into the acting portion 10 along a downward and leftward straight line on the periphery of the acting portion 10 crossing the center axis 4 of the shank 1.

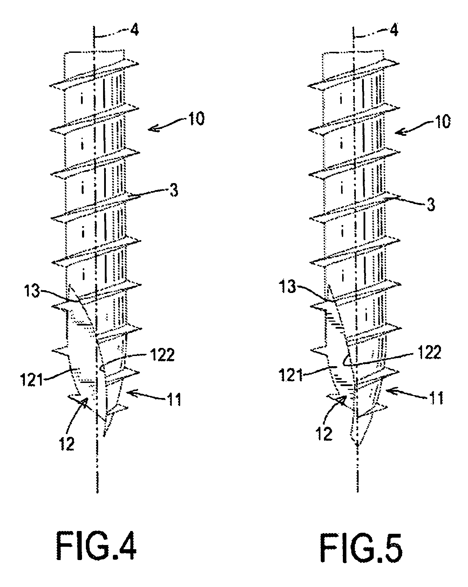

With reference to Fig. 4, the arced cutting surface 122 is incised into the acting portion 10 along a downward and rightward curve on the periphery of the acting portion 10 crossing the center axis 4 to form a deep cutting slot. With reference to Fig. 5, the arced cutting surface 122 is incised into the acting portion along a downward and rightward curve on the periphery of the acting portion 10 to form a shallow cutting slot, so that a bottom end of the arced cutting surface 122 is adjacent to the center axis 4.

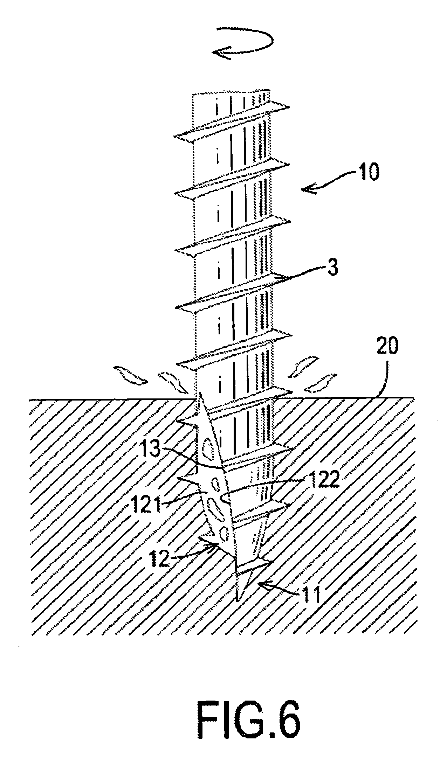

With reference to Figs. 1 and 6, when the self-tapping screw is drilled and screwed into a work piece 20, the tapered cone 11 of the self-tapping screw is abutted against the work piece 20 first. A tool, such as an electric tool, is tightly connected with the head 2 of the self-tapping screw and rotates the self-tapping screw so as to drive the self-tapping screw to drill and screw into the work piece 20. The blade portion 13 drills and taps a hole in the work piece. A space provided by the cutting slot 12 accommodates chips of the work piece 20 generated during the drilling and tapping. When the self-tapping screw is screwed into the work piece 20, the slanted chip evacuation surface 121 of the cutting slot 12 extrudes and evacuates the chips through the thread ridges of the threaded portion 3 until the self-tapping screw is fully screwed into the work piece 20.

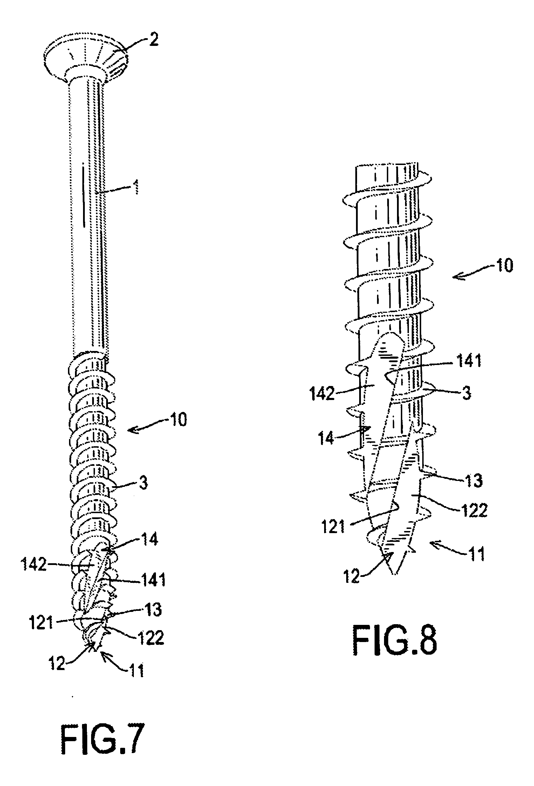

With reference to Figs. 7 and 8, a first embodiment of a self-tapping screw in accordance with the present invention is similar to the aforementioned embodiments shown in Figs. 1 to 5 except further having a first evacuation slot 14. The first evacuation slot 14 is formed in the acting portion 10, is tilted relative to the center axis 4 of the shank 1, upwardly extends toward the head 2, and has a first surface 141 and a second surface 142. The first surface 141 is tilted relative to the center axis 4 of the shank 1 and is parallel to the chip evacuation surface 121 of the cutting slot 12. The arced second surface 142 is connected with the first surface 141 at a common edge thereof of the second surface 142 and the first surface 141. The second surface (142) and the arced cutting surface (122) are arcuately formed in the acting portion (10) with respect to a common line

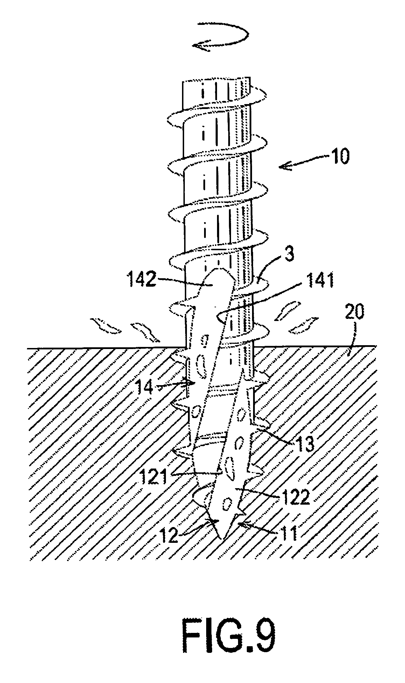

With reference to Figs. 7 and 9, when the self-tapping screw is drilled and screwed into the work piece, the tapered cone 11 of the self-tapping screw is abutted against the work piece 20 first. A tool, such as an electric tool, is tightly connected with the head 2 of the self-tapping screw to rotate the self-tapping screw so as to drive the self-tapping screw to drill and screw into the work piece 20. The blade portion 13 drills and taps a hole in the work piece. A space provided by the cutting slot 12 accommodates chips of the work piece 20 generated during the drilling and tapping. When the self-tapping screw is screwed into the work piece 20, the arced cutting surface 122 has an enlarged area due to the deeper and arced cutting slot 12 and allows the acting portion 10 to be easily drilled into the work piece 20, and the slanted chip evacuation surface 121 of the cutting slot 12 extrudes and evacuates the chips through the thread ridges of the threaded portion 3. After the self-tapping screw is drilled a depth into the work piece 20, the first evacuation slot 14 participates in the drilling and tapping. A space provided by the first evacuation slot 14 accommodates the chips generated during drilling and tapping to further alleviate the blockage caused by the generated chips. The slanted first surface 141 of the first evacuation slot 14 is collaborated with the arced cutting surface 122 of the cutting slot 12 to enhance the drilling and tapping capability.

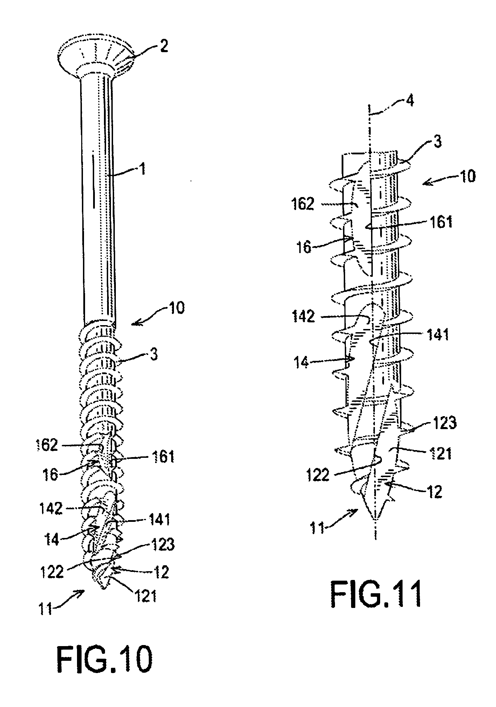

The embodiments of self-tapping screws in accordance with the present invention shown in Figs. 10 to 21 are similar to the embodiment shown in Figs. 7 to 9 except further having a second evacuation slot 16.

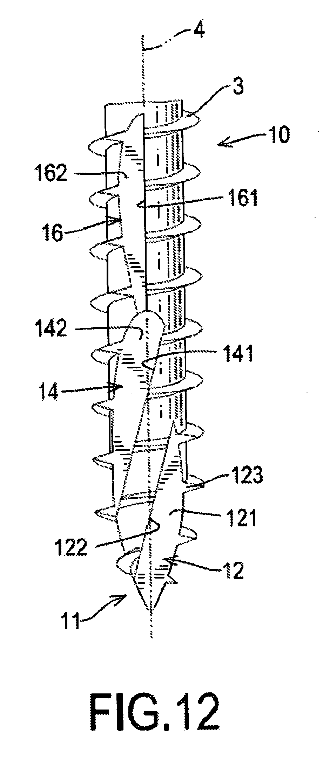

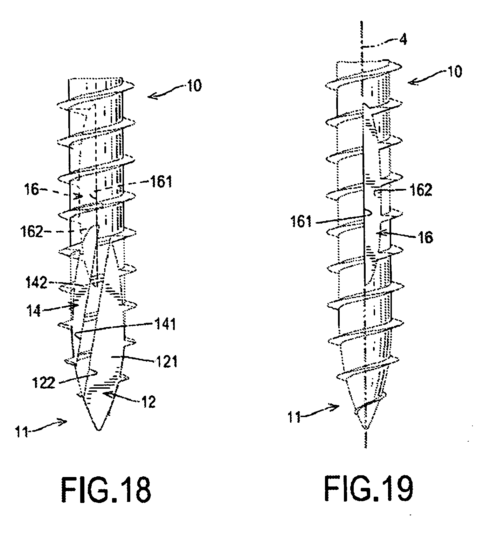

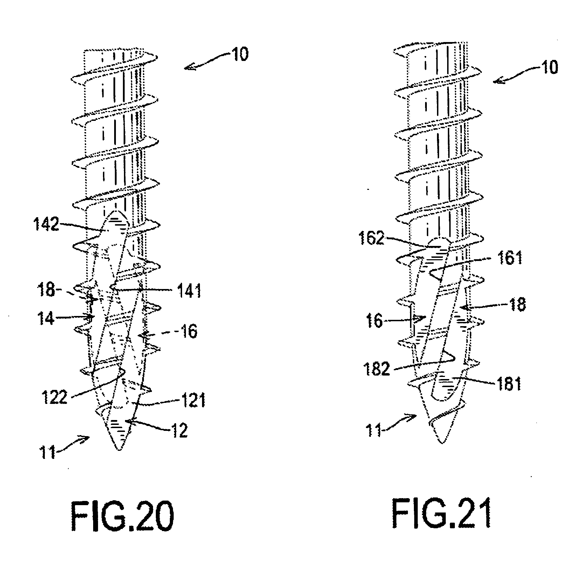

With reference to Figs. 10 and 11, in consideration of the shank 1 equally divided into two halves incised along the center axis 4, the second evacuation slot 16 is formed in the free end of the acting portion 10 on the half of the shank 1 where the cutting slot 12 and first evacuation slot 14 are located and separated from the cutting slot 12 and the first evacuation slot 14. A bottom end of the second evacuation slot 16 is higher than the tip of the tapered cone 11 for being separated from the cutting slot 12. The second evacuation slot 16 has a first surface 161 and a second surface 162. The first surface 161 may extend in a direction parallel to or oblique to the center axis 4 of the shank 1 as shown in Fig. 11 or 21. The second surface 162 may be located at a left position or a right position relative to the first surface 161 as shown in Figs. 11 and 19. The second evacuation slot 16 is formed above the first evacuation slot 14, and the first surface 161 of the second evacuation slot 16 extends upwardly in a direction parallel to the center axis 4 of the shank 1. With reference to Fig. 12, a bottom end of the second evacuation slot 16 communicates with a top end of the first evacuation slot 14.

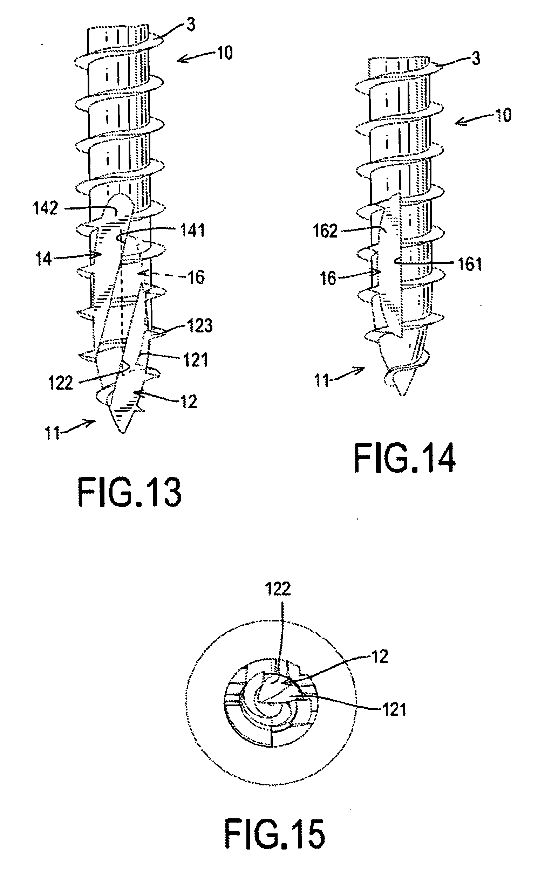

With reference to Figs. 13 to 15, the second evacuation slot 16 is located on one half of the shank 1 opposite to the other half where the cutting slot 12 and the first evacuation slot 14 are located. The first surface 161 of the second evacuation slot 16 extends upwardly in a direction parallel to the center axis 4 of the shank 1.

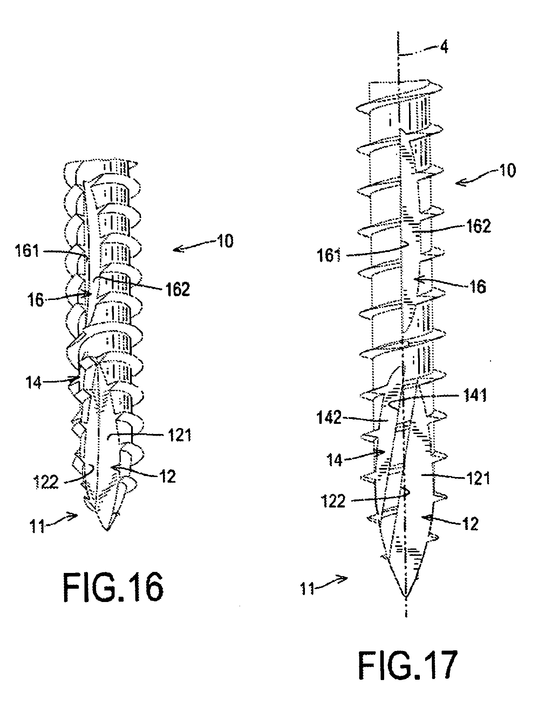

With reference to Figs. 16 and 17, the second evacuation slot 16 is formed on the same half of the shank where the cutting slot 12 and first evacuation slot 14 are located and above the cutting slot 12 and the first evacuation slot 14. With reference to Figs. 18 and 19, the second evacuation slot 16 is located on one half of the shank 1 opposite to the other half where the cutting slot 12 and the first evacuation slot 14 are located.

With reference to Figs. 20 and 21, the self-tapping screw further has a third evacuation slot 18 formed beside the second evacuation slot 16, separated from the cutting slot 12, the first evacuation slot 14 and the second evacuation slot 16 and being on one half of the shank 1 opposite to the other half where the cutting slot 12 and the first evacuation slot 14 are located, and the third evacuation slot 18 is adjacent to the first surface 161 of the second evacuation slot 16. The third evacuation slot 18 has a first surface 181 and a second surface 182 connecting with the first surface 181 of the third evacuation slot 18 at a common edge thereof of the first surface 181 and the second surface 182. The second surface 182 of the third evacuation slot 18 is parallel to the first surface 161 of the second evacuation slot 16, and is tilted relative to the center axis 4 of the shank 1.

The present invention has a larger cutting surface 122 due to a slanted cutting slot 12 into the acting portion 10 of the shank 1 and an arced cutting surface 122 easily scooping and cutting a work piece. Besides, unlike the axial and straight alignment of the cutting slot in conventional self-tapping screw, the parallel and slanted cutting slot 12 and the first evacuation slot 14 can be machined in one manufacturing process with two tools. With the additional second evacuation slot 16 and third evacuation slot 18, more chips generated during drilling and tapping can be rapidly and smoothly evacuated through the thread ridges of the thread portion 3 without blocking the drilling and tapping of the work piece 20.

Even though numerous characteristics and advantages of the present invention have been set forth in the foregoing description, together with details of the structure and function of the invention, the disclosure is illustrative only. Changes may be made in detail, especially in matters of shape, size, and arrangement of parts within the principles of the invention to the full extent indicated by the broad general meaning of the terms in which the appended claims are expressed.

## Claims

1. A self-tapping screw comprising:
a shank (1) having a center axis, a periphery, a top and a lower portion;
a head (2) formed on the top of the shank (1); and
an acting portion (10) formed in the lower portion of the shank (1) and having:
a periphery;
a tip portion;
a threaded portion (3) having a helical thread formed around the periphery of the acting portion (10); a tapered cone (11) formed on the tip portion of the acting portion (10) and having a tip;
a cutting slot (12) formed in the acting portion (10), being tilted relative to the center axis of the shank (1) and extending from the tapered cone (11) in a direction toward the head (2) and having:
a chip evacuation surface (121) being tilted relative to the center axis (4) of the shank (1); and
an arced cutting surface (122) connected with the chip evacuation surface (121) at a common edge thereof of the arced cutting surface (122) and the chip evacuation surface (121) to form a V-shaped section, upwardly extending from the tip of the tapered cone (11), and having a blade portion (13) formed by a portion of the arced cutting surface (122) intersecting with the periphery of the shank (1) and the threaded portion (3); and
**characterized in that**
the acting portion (10) further has:
a first evacuation slot (14) formed in the acting portion (10), being tilted relative to the center axis of the shank (1), upwardly extending toward the head (2) and having:
a first surface (141) being tilted relative to the center axis (4) of the shank (1) and parallel to the chip evacuation surface (121) of the adjacent cutting slot (12); and
a second surface (142) connected with the first surface (141) at a common edge of the first surface (141) and the second surface (142), wherein the second surface (142) and the arced cutting surface (122) are arcuately formed in the acting portion (10) with respect to a common line.

2. The self-tapping screw as claimed in claim 1, wherein the arced cutting surface (122) of the cutting slot (12) is incised into the acting portion (10) along a downward and rightward curve on the periphery of the acting portion (10) so that a bottom end of the arced cutting surface (122) approaches the center axis (4) of the shank (1).

3. The self-tapping screw as claimed in claim 1, wherein the arced cutting surface (122) of the cutting slot (12) is incised into the acting portion (10) along a downward and rightward curve on the periphery of the acting portion (10) crossing the center axis (4) of the shank (1).

4. The self-tapping screw as claimed in claim 1, wherein the arced cutting surface (122) is incised into the acting portion along a downward and rightward curve on the periphery of the acting portion (10) to form a shallow cutting slot, so that a bottom end of the arced cutting surface (122) is adjacent to the center axis (4) of the shank (1).

5. The self-tapping screw as claimed in claim 1, wherein the acting portion (10) further has a second evacuation slot (16) formed in the acting portion (10), separated from the cutting slot (12) and the first evacuation slot (14) and having:
a bottom end;
a first surface (161); and
a second surface (162) connected with the first surface (161) of the second evacuation slot (16) at a common edge thereof, wherein a bottom end of the second evacuation slot (16) is higher than the tip of the tapered cone (11).

6. The self-tapping screw as claimed in claim 5, wherein the first surface (161) of the second evacuation slot (16) extends in a direction parallel to the center axis (4) of the shank (1).

7. The self-tapping screw as claimed in claim 5, wherein the first surface (161) of the second evacuation slot (16) extends in a direction oblique to the center axis (4) of the shank (1).

8. The self-tapping screw as claimed in any one of claims 5 to 7, wherein the shank (1) is equally divided into two halves incised along the center axis (4), the second evacuation slot (16) is located on the half of the shank (1) where the cutting slot (12) and first evacuation slot (14) are located, and the bottom end of the second evacuation slot (16) is higher than the tip of the tapered cone (11).

9. The self-tapping screw as claimed in any one of claims 5 to 7, wherein the shank (1) is equally divided into two halves incised along the center axis (4), and the second evacuation slot (16) is located on one half of the shank (1) opposite to the other half where the cutting slot (12) and first evacuation slot (14) are located.

10. The self-tapping screw as claimed in claim 9, wherein the acting portion (10) further has a third evacuation slot (18) formed beside the second evacuation slot (16) and located on the half of the shank (1) opposite to the other half where the cutting slot (12) and the first evacuation slot (14) are located, separated from the cutting slot (12), the first evacuation slot (14) and the second evacuation slot (16), and having:
a first surface (181); and
a second surface (182) connecting with the first surface (181) of the third evacuation slot (18) at a common edge thereof, and being parallel to the first surface (161) of the second evacuation slot (16) and tilted relative to the center axis (4) of the shank (1).

11. The self-tapping screw as claimed in any one of claims 5 to 7, wherein the second surface (162) of the second evacuation slot (16) is located at a left position relative to the first surface (161) of the second evacuation slot (16).

12. The self-tapping screw as claimed in any one of claims 5 to 7, wherein the second surface (162) of the second evacuation slot (16) is located at a right position relative to the first surface (161) of the second evacuation slot (16).

## Patentansprüche

1. Selbstschneidende Schraube, welche umfasst:
- einen Schaft (1), welcher eine Mittelachse, einen Umfangsbereich, einen oberen und einen unteren Bereich aufweist;
- einen Kopf (2), welcher am oberen Bereich des Schaftes (1) ausgebildet ist, und
- einen Wirkungsbereich (10), welcher im unteren Bereich des Schaftes (1) ausgebildet ist und welcher die folgenden Bereiche aufweist:
- einen Umfangsbereich,
- einen Spitzenbereich,
- einen mit Gewinde versehenen Bereich (3), welcher ein spiralförmiges Gewinde aufweist, das um den Umfang des Wirkungsbereiches (10) herum ausgebildet ist,
- einen sich verjüngenden Kegel (11), der am Spitzenbereich des Wirkungsbereiches (10) ausgebildet ist und eine Spitze aufweist,
- einen im Wirkungsbereich (10) ausgebildeten Schneidschlitz (12), welcher bezüglich der Mittelachse des Schaftes (1) geneigt ist und sich von dem sich verjüngenden Kegel (11) aus in Richtung auf den Kopf (2) erstreckt und folgendes aufweist:
- eine Spanabführfläche (121), welche bezüglich der Mittelachse (4) des Schaftes (1) geneigt ist, und
- eine gewölbte Schneidfläche (122), welche mit der Spanabführfläche (121) an einer ihnen gemeinsamen Kante von gewölbter Schneidfläche (122) und Spanabführfläche (121) verbunden ist, so dass ein V-förmiger Abschnitt gebildet wird, und welche sich von der Spitze des sich verjüngenden Kegels (11) aus nach oben erstreckt, und welcher einen Klingenbereich (13) aufweist, der durch einen Teil der gewölbten Schneidfläche gebildet wird, welche den Umfangsbereich des Schaftes (1) und den mit Gewinde versehenen Bereich (3) schneidet,
**dadurch gekennzeichnet, dass**
der Wirkungsbereich (10) außerdem aufweist:
- einen ersten Abführschlitz (14), welcher im Wirkungsbereich (10) ausgebildet ist, bezüglich der Mittelachse des Schaftes (1) geneigt ist und sich nach oben in Richtung auf den Kopf (2) erstreckt und folgendes aufweist:
- eine erste Fläche (141), welche bezüglich der Mittelachse (4) des Schaftes (1) geneigt ist und parallel zur Spanabführfläche (121) des angrenzenden Schneidschlitzes (12) verläuft, und
- eine zweite Fläche (142), welche mit der ersten Fläche (141) an einer gemeinsamen Kante von erster Fläche (141) und zweiter Fläche (142) verbunden ist, wobei die zweite Fläche (142) und die gewölbte Schneidfläche (122) im Wirkungsbereich (10) in Bezug auf eine gemeinsame Linie gekrümmt ausgebildet sind.

2. Selbstschneidende Schraube nach Anspruch 1, bei welcher die gewölbte Schneidfläche (122) des Schneidschlitzes (12) in den Wirkungsbereich (10) hinein längs einer auf dem Umfang des Wirkungsbereiches (10) nach unten und rechts verlaufenden Kurve dergestalt eingeschnitten ist, dass das untere Ende der gewölbten Schneidfläche (122) sich der Mittelachse (4) des Schaftes (1) nähert.

3. Selbstschneidende Schraube nach Anspruch 1, bei welcher die gewölbte Schneidfläche (122) des Schneidschlitzes (12) in den Wirkungsbereich (10) hinein längs einer auf dem Umfang des Wirkungsbereiches (10) nach unten und rechts verlaufenden Kurve, welche die Mittelachse (4) des Schaftes (1) kreuzt, eingeschnitten ist.

4. Selbstschneidende Schraube nach Anspruch 1, bei welcher die gewölbte Schneidfläche (122) des Schneidschlitzes (12) in den Wirkungsbereich (10) hinein längs einer auf dem Umfang des Wirkungsbereiches (10) nach unten und rechts verlaufenden Kurve dergestalt eingeschnitten ist, dass ein flacher Schneidschlitz entsteht, so dass das untere Ende der gewölbten Schneidfläche (122) sich in unmittelbarer Nähe der Mittelachse (4) des Schaftes (1) befindet.

5. Selbstschneidende Schraube nach Anspruch 1, bei welcher der Wirkungsbereich (10) außerdem einen zweiten Abführschlitz (16) aufweist, welcher im Wirkungsbereich (10) ausgebildet ist und vom Schneidschlitz (12) und vom ersten Abführschlitz (14) getrennt ist und folgendes aufweist:
- ein unteres Ende,
- eine erste Fläche (161) und
- eine zweite Fläche (162), welche mit der ersten Fläche (161) des zweiten Abführschlitzes (16) an einer ihnen gemeinsamen Kante verbunden ist, wobei das untere Ende des zweiten Abführschlitzes (16) höher liegt als die Spitze des sich verjüngenden Kegels (11).

6. Selbstschneidende Schraube nach Anspruch 5, bei welcher die erste Fläche (161) des zweiten Abführschlitzes (16) sich in einer Richtung parallel zur Mittelachse (4) des Schaftes (1) erstreckt.

7. Selbstschneidende Schraube nach Anspruch 5, bei welcher die erste Fläche (161) des zweiten Abführschlitzes (16) sich in einer Richtung schräg zur Mittelachse (4) des Schaftes (1) erstreckt.

8. Selbstschneidende Schraube nach irgend einem der Ansprüche 5 bis 7, bei welcher der Schaft (1) gleichmäßig in zwei Hälften unterteilt ist, welche längs der Mittellinie (4) eingeschnitten sind, der zweite Abführschlitz (16) sich in der einen Hälfte des Schaftes (1) befindet, in welcher sich der Schneidschlitz (12) und der erste Abführschlitz (14) befinden, und das untere Ende des zweiten Abführschlitzes (16) höher liegt als die Spitze des sich verjüngenden Kegels (11).

9. Selbstschneidende Schraube nach irgend einem der Ansprüche 5 bis 7, bei welcher der Schaft (1) gleichmäßig in zwei Hälften unterteilt ist, welche längs der Mittellinie (4) eingeschnitten sind, der zweite Abführschlitz (16) sich in derjenigen Hälfte des Schaftes (1) befindet, welche der anderen Hälfte gegenüber liegt, in welcher sich der Schneidschlitz (23) und der erste Abführschlitz (14) befinden.

10. Selbstschneidende Schraube nach Anspruch 9, bei welcher der Wirkungsbereich (10) außerdem einen dritten Abführschlitz (18) aufweist, welcher neben dem zweiten Abführschlitz (16) ausgebildet ist und sich in derjenigen Hälfte des Schaftes (1) befindet, die der anderen Hälfte gegenüber liegt, in welcher sich der Schneidschlitz (12) und der erste Abführschlitz (14) befinden, und welcher vom Schneidschlitz (12) getrennt ist, wobei der erste Spanabführschlitz (14) und der zweite Abführschlitz (16) folgendes aufweisen::
- eine erste Fläche (181) und
- eine zweite Fläche (182), welche mit der ersten Fläche (181) des dritten Abführschlitzes (18) an einer ihnen gemeinsamen Kante verbunden ist und parallel zur ersten Fläche (161) des zweiten Abführschlitzes (16) verläuft und in Bezug auf die Mittelachse (4) des Schaftes (1) geneigt ist.

11. Selbstschneidende Schraube nach irgend einem der Ansprüche 5 bis 7, bei welcher die zweite Fläche(162) des zweiten Abführschlitzes (16) sich links von der ersten Fläche (161) des zweiten Abführschlitzes (16) befindet.

12. Selbstschneidende Schraube nach irgend einem der Ansprüche 5 bis 7, bei welcher die zweite Fläche des zweiten Abführschlitzes (16) sich rechts von der ersten Fläche (161) des zweiten Abführschlitzes (16) befindet.

## Revendications

1. Vis autotaraudeuse comprenant :
une tige (1) ayant un axe central, une périphérie, des portions supérieure et inférieure ;
une tête (2) formée sur le dessus de la tige (1) ; et
une portion d'action (10) formée dans la portion inférieure de la tige (1) et ayant :
une périphérie ;
une portion de bout ;
une portion filetée (3) ayant un filet hélicoïdal formé autour de la périphérie de la portion d'action (10) ;
un cône effilé (11) formé sur la portion de bout de la portion d'action (10) et ayant un bout ;
une fente de coupe (12) formée dans la portion d'action (10), étant inclinée par rapport à l'axe central de la tige (1) et s'étendant du cône effilé (11) dans une direction vers la tête (2) et ayant :
une surface d'évacuation de copeaux (121) étant inclinée par rapport à l'axe central (4) de la tige (1) ; et
une surface de coupe arquée (122) raccordée avec la surface d'évacuation de copeaux (121) au niveau d'un bord commun de la surface de coupe arquée (122) et de la surface d'évacuation de copeaux (121) afin de former une section en forme de V, s'étendant vers le haut du bout du cône effilé (11), et ayant une portion de lame (13) formée par une portion de la surface de coupe arquée (122) coupant la périphérie de la tige (1) et la portion effilée (3) ; et
**caractérisée en ce que**
la portion d'action (10) comporte en outre :
une première fente d'évacuation (14) formée dans la portion d'action (10), étant inclinée par rapport à l'axe central de la tige (1), s'étendant vers le haut vers la tête (2) et ayant :
une première surface (141) étant inclinée par rapport à l'axe central (4) de la tige (1) et parallèle à la surface d'évacuation de copeaux (121) de la fente de coupe (12) adjacente ; et
une deuxième surface (142) raccordée avec la première surface (141) au niveau d'un bord commun de la première surface (141) et de la deuxième surface (142), dans laquelle la deuxième surface (142) et la surface de coupe arquée (122) sont formées de façon arquée dans la portion d'action (10) par rapport à une ligne commune.

2. Vis autotaraudeuse selon la revendication 1, dans laquelle la surface de coupe arquée (122) de la fente de coupe (12) est incisée dans la portion d'action (10) le long d'une courbe vers le bas et vers la droite sur la périphérie de la portion d'action (10) de sorte qu'une extrémité inférieure de la surface de coupe arquée (122) s'approche de l'axe central (4) de la tige (1).

3. Vis autotaraudeuse selon la revendication 1, dans laquelle la surface de coupe arquée (122) de la fente de coupe (12) est incisée dans la portion d'action (10) le long d'une courbe vers le bas et vers la droite sur la périphérie de la portion d'action (10) croisant l'axe central (4) de la tige (1).

4. Vis autotaraudeuse selon la revendication 1, dans laquelle la surface de coupe arquée (122) est incisée dans la portion d'action le long d'une courbe vers le bas et vers la droite sur la périphérie de la portion d'action (10) afin de former une fente de coupe superficielle, de sorte qu'une extrémité inférieure de la surface de coupe arquée (122) est adjacente à l'axe central (4) de la tige (1).

5. Vis autotaraudeuse selon la revendication 1, dans laquelle la portion d'action (10) comporte en outre une deuxième fente d'évacuation (16) formée dans la portion d'action (10), séparée de la fente de coupe (12) et de la première fente d'évacuation (14) et ayant :
une extrémité inférieure ;
une première surface (161) ; et
une deuxième surface (162) raccordée avec la première surface (161) de la deuxième fente d'évacuation (16) au niveau d'un bord commun de celle-ci, dans laquelle une extrémité inférieure de la deuxième fente d'évacuation (16) est plus haute que le bout du cône effilé (11).

6. Vis autotaraudeuse selon la revendication 5, dans laquelle la première surface (161) de la deuxième fente d'évacuation (16) s'étend dans une direction parallèle par rapport à l'axe central (4) de la tige (1).

7. Vis autotaraudeuse selon la revendication 5, dans laquelle la première surface (161) de la deuxième fente d'évacuation (16) s'étend dans une direction oblique par rapport à l'axe central (4) de la tige (1).

8. Vis autotaraudeuse selon l'une quelconque des revendications 5 à 7, dans laquelle la tige (1) est divisée de façon égale en deux moitiés incisées le long de l'axe central (4), la deuxième fente d'évacuation (16) est située sur la moitié de la tige (1) où la fente de coupe (12) et la première fente d'évacuation (14) sont situées, et l'extrémité inférieure de la deuxième fente d'évacuation (16) est plus haute que le bout du cône effilé (11).

9. Vis autotaraudeuse selon l'une quelconque des revendications 5 à 7, dans laquelle la tige (1) est divisée de façon égale en deux moitiés incisées le long de l'axe central (4), et la deuxième fente d'évacuation (16) est située sur une moitié de la tige (1) opposée à l'autre moitié où la fente de coupe (12) et la première fente d'évacuation (14) sont situées.

10. Vis autotaraudeuse selon la revendication 9, dans laquelle la portion d'action (10) comporte en outre une troisième fente d'évacuation (18) formée à côté de la deuxième fente d'évacuation (16) et située sur la moitié de la tige (1) opposée à l'autre moitié où la fente de coupe (12) et la première fente d'évacuation (14) sont situées, séparée de la fente de coupe (12), la première fente d'évacuation (14) et la deuxième fente d'évacuation (16), et ayant :
une première surface (181) ; et
une deuxième surface (182) se raccordant avec la première surface (181) de la troisième fente d'évacuation (18) au niveau d'un bord commun de celle-ci, et étant parallèle à la première surface (161) de la deuxième fente d'évacuation (16), et inclinée par rapport à l'axe central (4) de la tige (1).

11. Vis autotaraudeuse selon l'une quelconque des revendications 5 à 7, dans laquelle la deuxième surface (162) de la deuxième fente d'évacuation (16) est située en une position à gauche par rapport à la première surface (161) de la deuxième fente d'évacuation (16).

12. Vis autotaraudeuse selon l'une quelconque des revendications 5 à 7, dans laquelle la deuxième surface (162) de la deuxième fente d'évacuation (16) est située en une position à droite par rapport à la première surface (161) de la deuxième fente d'évacuation (16).
